# EUROPEAN PATENT APPLICATION

(11) **EP 1 111 817 A2**
(43) Date of publication of application: **27.06.2001**
(21) Application number: 00127977.7
(22) Date of filing: 20.12.2000
(51) Int. Cl.: H04B 10/158

(54) **Optical communication receiver**

(30) Priority: 21.12.1999 JP 36340999
(71) Applicant: NEC CORPORATION, Tokyo (JP)
(72) Inventor: Ito, Toshiharu, Minato-ku, Tokyo (JP); Inada, Yoshihisa, Minato-ku, Tokyo (JP); Fukuchi, Kiyoshi, Minato-ku, Tokyo (JP); Suzaki, Tetsuyuki, Minato-ku, Tokyo (JP)
(74) Representative: Glawe, Delfs, Moll & Partner

(57) **Abstract**

An optical communication receiver of this invention includes a photoelectric converter for converting an input optical signal into an electrical signal, a signal divider for dividing the electrical signal from the photoelectric converter into a plurality of signals, a clock extractor for reconstructing a clock of the photoelectrically converted input signal, phase adjusters for giving different delays to the respective signal decision timing clocks from the clock extractor or the plurality of electrical signals divided by the signal divider, a plurality of code decision units for performing code decision of the plurality of electrical signals at different timings, and an OR circuit for ORing the outputs from the plurality of code decision units. An input optical signal may be divided into signals by an optical divider before it is converted into an electrical signal.

## Description

### BACKGROUND OF THE INVENTION

### FIELD OF THE INVENTION:

The present invention relates to an optical transmission system using RZ (Return to Zero)-modulated signals and, more particularly, to an optical communication receiver with excellent resilience against the distortion of signal light in the timing direction (phase direction).

### DESCRIPTION OF THE PRIOR ART:

To cope with an increase in communication capacity with the proliferation of the Internet and the like, an increase in the capacity of a trunk optical transmission system has been studied. Recently, with the widespread use of wavelength multiplexing techniques, the transmission capacity is increased by increasing the bit rate of each channel and the number of wavelengths.

As a technique of realizing high-bit-rate transmission, a soliton optical transmission scheme has received a great deal of attention. A characteristic feature of soliton optical transmission is that a nonlinear effect in a transmission path optical fiber, which is generally a factor responsible for a deterioration in signal wavelength, is positively used for stable transmission of a signal waveform. For this reason, the soliton optical transmission scheme allows long-distance, high-speed optical communication which cannot be attained by other schemes.

In wavelength multiplexing transmission, when soliton optical transmission is tried in each channel, transmission is not so stable as in a single channel, and the signal waveform after transmission is distorted. This is because interaction between the channels is produced by a nonlinear optical effect in the transmission path optical fiber.

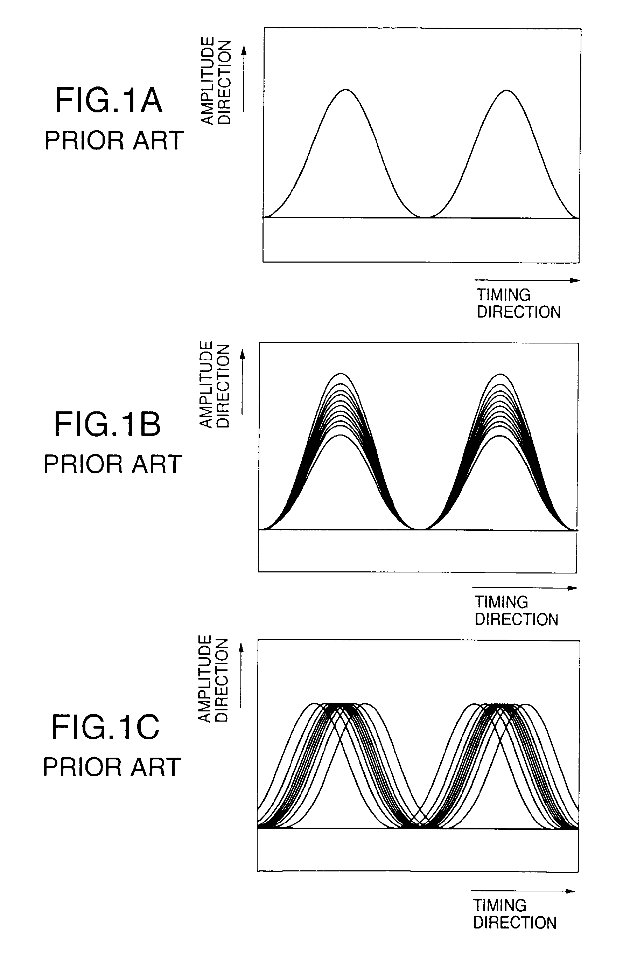

Signal waveform distortions in a system using RZ-modulated signals as in soliton optical transmission are classified into two categories, i.e., distortions in the amplitude direction and phase direction (timing direction). Figs. 1A to 1C respectively show the eye patterns of waveforms in a system using the above RZ-modulated signals. Fig. 1A shows an eye pattern without any waveform distortion. Fig. 1B shows an eye pattern with a waveform distortion in the amplitude direction. Fig. 1C shows an eye pattern with a waveform distortion in the timing direction.

In general, waveform distortions are accounted by those in the two directions that are superposed on each other. A characteristic feature of wavelength multiplexed soliton optical transmission is that the waveform distortion in the timing direction becomes more noticeable to degrade transmission characteristics (see Linn F. Mollenauer et. al., Journal of Lightwave Technology, vol. 9, pp. 362, 1991).

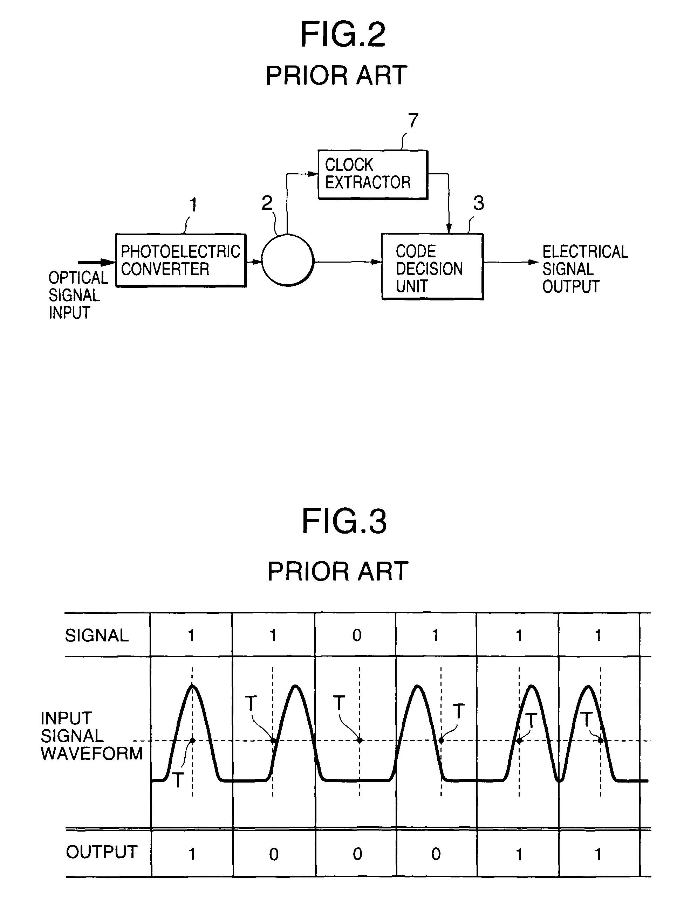

Fig. 2 shows the arrangement of a communication optical receiver that is generally used. An illustration of an electric amplifier is omitted because it is not relevant to the following description. Fig. 3 shows how this receiver receives a signal with distortion in the timing direction. Referring to Fig. 3, decision timings and decision amplitudes are indicated by the dotted lines, and the intersections ("T" in Fig. 3) of the dotted lines represent decision points. Although the decision timing is set in the center of each bit, decision errors have occurred at the second and fourth bits from the left owing to signal waveform fluctuations in the timing direction.

As described above, when an RZ signal having different fluctuations in the timing direction in units of bits is used, decision errors tend to occur in a conventional receiver in which the decision timing is fixed to one point.

Various attempts have been made to develop a method of setting an optimal decision timing. For example, a plurality of decision units are prepared to identify a signal at different timings, and a signal identified at an optimal timing is selected by using a proper method.

For example, Japanese Unexamined Patent Publication No. 62-159545 or 11-215110 discloses a technique of selecting an optimal clock from clocks with different phases, and input data is identified with the selected optimal clock, thereby obtaining an decision output free from a band deterioration of the reception signal, jitter, and the like.

Japanese Unexamined Patent Publication No. 8-321827 discloses a technique of preparing first and second decision/determination section for deciding input data in units of clocks, making data input to the first and second decision/determination sections and have different phases to determine the respective decision results, and selecting and outputting one of the decision data obtained by the first and second decision/determination section.

The above conventional technique is mainly used for a burst receiver for receiving discontinuous signal packets and is especially effective when fluctuations or changes in the timing direction are sufficiently slow as compared with the bit rate. However, this technique is not effective for timing fluctuations that occur in units of bits.

As described above, when a signal exhibiting timing fluctuations in units of bits is received by the above conventional optical communication receiver, decision errors tend to occur.

### SUMMARY OF THE INVENTION

The present invention has been made in consideration of the above situation in the prior art, and has as its object to provide an optical communication receiver which can receive signal light having fluctuations in the timing direction with less digital errors.

In order to achieve the above object, according to the first aspect of the present invention, there is provided an optical communication receiver comprising a photoelectric converter for converting an optical signal into an electrical signal, a signal divider for dividing the electrical signal from the photoelectric converter into a plurality of signals, code decision units connected to the respective outputs of the signal divider, phase adjusters inserted in lines for feeding clocks to the respective code decision units or between the signal divider and the respective code identifiers so as to provide fixed or variable delays, and an OR circuit for ORing the outputs from the respective code decision units.

In order to achieve the above object, according to the second aspect of the present invention, there is provided an optical communication receiver comprising an optical demultiplexer for demultiplexing an optical input signal into a plurality of signals, photoelectric converters connected to the respective outputs of the optical demultiplexer, code decision units connected to the outputs of the respective photoelectric converters, phase adjusters which are inserted in lines for feeding clocks to the respective code decision units or between the respective photoelectric converters and the code decision units so as to give fixed or variable delays, and an OR circuit for ORing outputs from the respective code decision units.

According to the present invention, a plurality of code decision units with different signal decision timings are installed to let the receiver have a plurality of decision points in the timing direction. Even if, therefore, a signal has fluctuations in the timing direction, the possibility that one of the plurality of decision points becomes an optimal decision timing for the bit is high. The outputs from the respective decision units are ORed to obtain a receiver output.

The reason why the outputs from the respective decision units are ORed is that when an RZ-modulated signal dominantly has fluctuations in the timing direction, an decision error tends to occur with respect to a "1" signal, and the possibility of erroneously decision a "0" signal as a "1" signal is low. If, therefore, at least one of a plurality of decision units identifies a given signal as "1", "1" can be identified/output.

As is obvious from the respective aspects and their functions, according to the present invention, since a plurality of code decision units with different signal decision timings are installed, and outputs from the respective decision units are ORed, the resilience of the receiver against fluctuations in the timing direction increases. This also makes it possible to increase the capacity and communication distance of the optical transmission system.

The above and many other objects, features and advantages of the present invention will become manifest to those skilled in the art upon making reference to the following detailed description and accompanying drawings in which preferred embodiments incorporating the principle of the present invention are shown by way of illustrative examples.

### BRIEF DESCRIPTION OF THE DRAWINGS

Figs. 1A to 1C respectively show the eye patterns of waveforms in a system using RZ-modulated signals, in which Fig. 1A shows an eye pattern without any waveform distortion, Fig. 1B shows an eye pattern with waveform distortion in the amplitude direction, and Fig. 1C shows an eye pattern with waveform distortion in the phase direction (timing direction);
Fig. 2 is a block diagram showing the schematic arrangement of a conventional optical communication receiver;
Fig. 3 is a view showing code decision in a case wherein the conventional optical communication receiver receives an RZ-modulated signal with waveform distortion in the timing direction;
Fig. 4 is a block diagram showing the schematic arrangement of an optical communication receiver according to the first embodiment of the present invention;
Fig. 5 is a view showing code decision in a case wherein the optical communication receiver of the present invention receives an RZ-modulated signal with waveform distortion in the timing direction;
Fig. 6 is a view showing a state wherein timing differences each corresponding to 20% of a bit slot are set at three code decision points; and
Figs. 7 and 8 are block diagrams respectively showing the schematic arrangements of optical communication receivers according to the second and third embodiments of the present invention.

### DETAILED DESCRIPTION OF PREFERRED EMBODIMENTS

Several preferred embodiments of the present invention will be described in detail below with reference to the accompanying drawings.

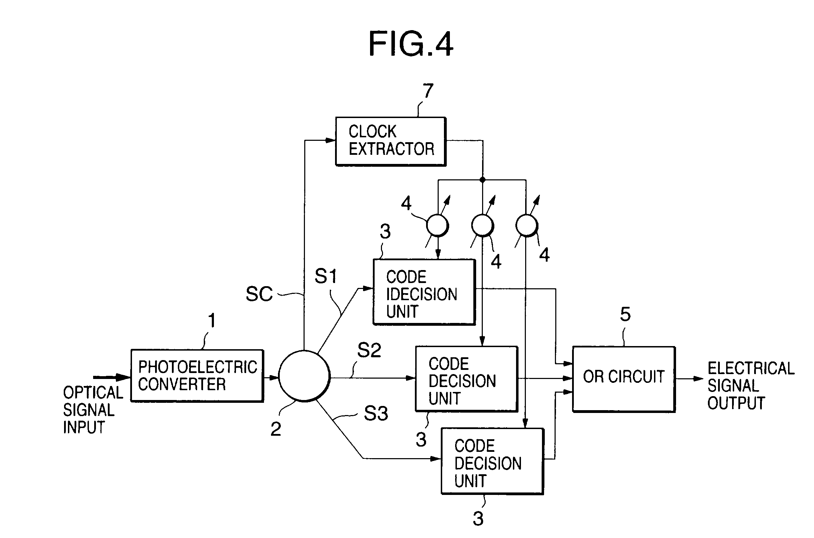

Fig. 4 is a block diagram of an optical receiver according to the first embodiment of the present invention. An input signal photoelectrically converted by a photoelectric converter 1 is divided into a plurality of components (a total of four components, i.e., three components S1, S2, and S3 for a signal, and one component SC for clock reconstruction) by a signal divider 2. Code decision units 3 for code discrimination are connected to the respective outputs of the signal divider 2.

A clock signal extracted by a clock extractor 7 is supplied to each code decision unit 3. At this time, phase adjusters 4 are adjusted to set different timings for code decision in the respective code decision units. Signals output from the respective code decision units 3 are ORed by an OR circuit 5, and the resultant data becomes an output from the receiver.

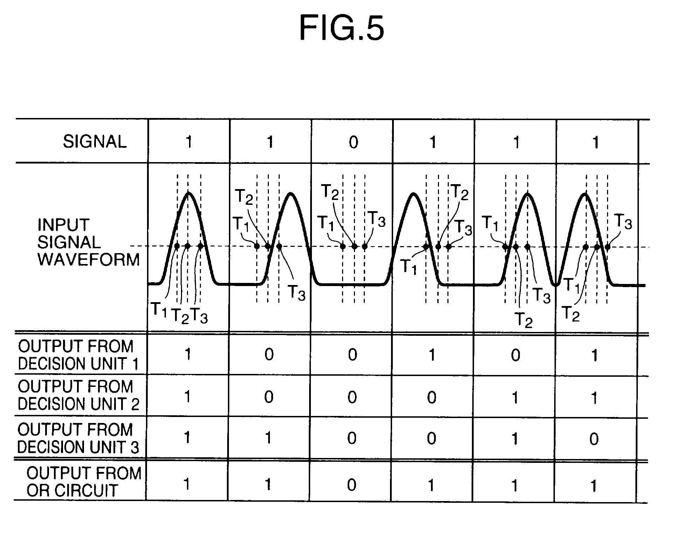

An example of the operation of the present invention will be described with reference to Fig. 5. In this case, as shown in Fig. 4, a signal is branched into three components, and different decision timings (T₁, T₂, T₃) are provided for the respective components. As is obvious from the outputs from the respective decision units, no decision unit outputs the correct input signal (110111 from the left) due to a deterioration in waveform. By calculating the OR of the outputs from the respective decision units (OR circuit output), however, decision errors due to fluctuations in the timing direction are corrected.

The manner in which a difference is set between the code decision timings in the respective decision units depends on the magnitudes of fluctuations of signal light in the timing and amplitude directions. For this reason, an optimal timing difference cannot be set in a uniform manner. Assume that the fluctuations of signal light in the timing direction (phase direction) are not very large with respect to a bit slot. In this case, if the standard deviation of fluctuation amounts is represented by σ, the three decision timings may be respectively set at the center of the bit slot and positions spaced apart from the center by ±*σ.*

Assume that the fluctuations of the signal light in the timing direction are large. In this case, if an excessively large difference is set between the decision timings, code decision is affected by adjacent bits. That is, the magnitude of the difference between the decision timings has its upper limit. To cover 50% of a bit slot, the respective decision timings are preferably set within ±25% of the bit slot width from the center at maximum.

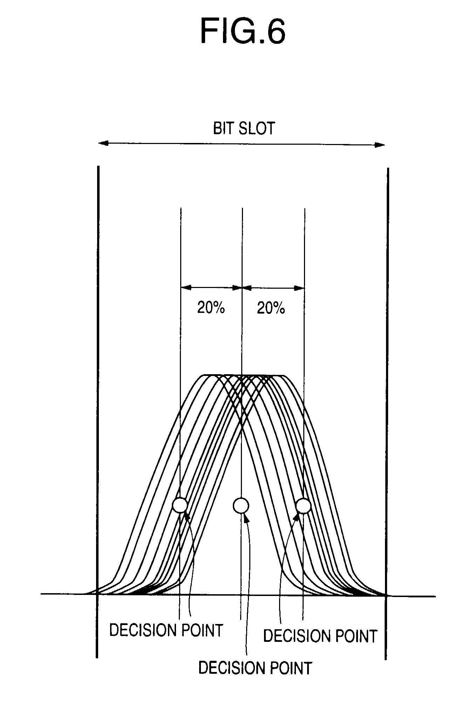

Fig. 6 shows a case wherein timing differences each corresponding to 20% of the bit slot are set between the three decision points.

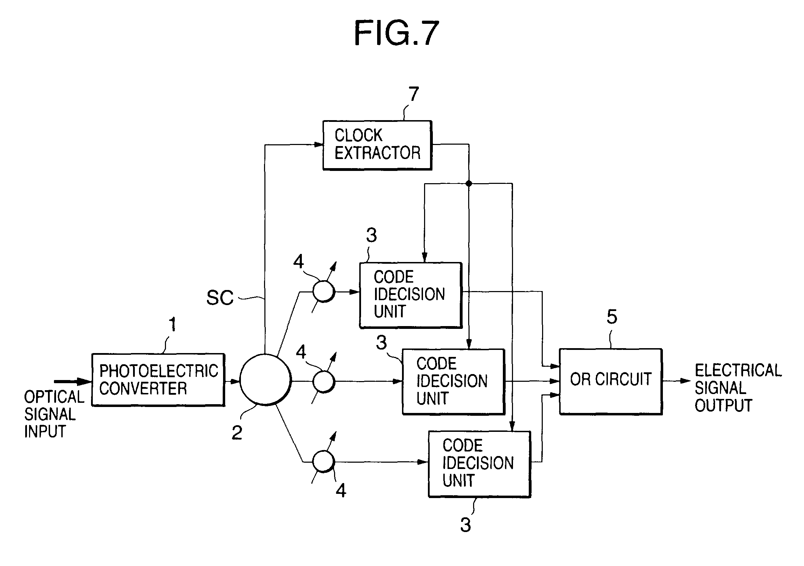

Fig. 7 is a block diagram of an optical receiver according to the second embodiment of the present invention. To set differences between the decision timings in the respective decision units, the first embodiment of the present invention has the phase adjusters 4 on the clock feed lines. In contrast to this, the second embodiment has a phase adjuster between a signal divider 2 and a code decision unit 3. With this arrangement as well, effects similar to those in the first embodiment can be obtained.

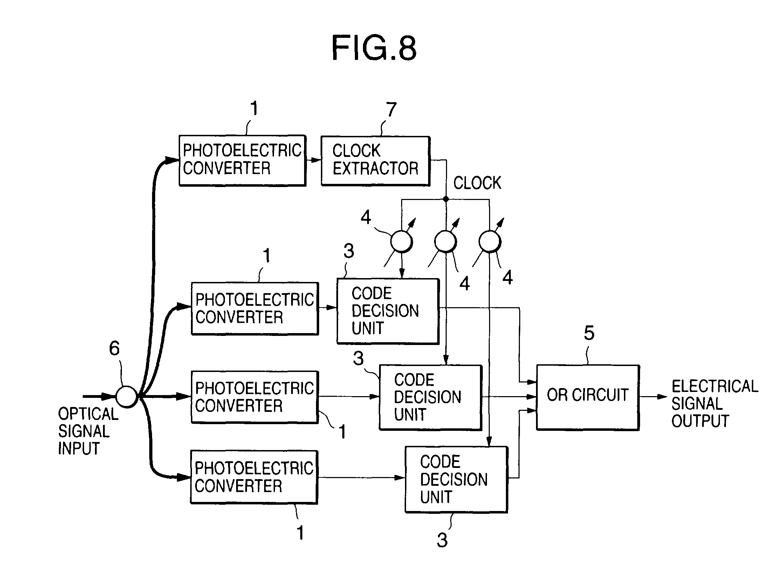

Fig. 8 is a block diagram of an optical receiver according to the third embodiment of the present invention. This embodiment differs from the first embodiment in that a signal is branched while it is still signal light. With this arrangement as well, effects similar to those in the first embodiment can be obtained. According to this embodiment, although the receiver becomes inexpensive as photoelectric converters and electric amplifiers increase in number, there is no need to perform processing that degrades signal quality, e.g., amplification and branching after photoelectric conversion.

First of all, signal light is divided into a plurality of (three in Fig. 8) components by an optical divider 6. The respective components are photoelectrically converted by photoelectric converters 1 and subjected to code decision in code decision units 3. At this time, phase adjusters 4 placed on the clock feed lines perform timing adjustment to set differences between the decision timings in the respective code decision units.

The signals output from the respective code decision units 3 are ORed by an OR circuit 5. The resultant data is output as an output signal from the OR circuit 5. A method of setting timing differences at the respective decision points is the same as that in the first embodiment. Referring to Fig. 8, the phase adjusters 4 are placed on the clock feed lines. Similar effects can be obtained even if the phase adjusters 4 are placed between the optical divider 6 and the photoelectric converters 1 or between the photoelectric converters 1 and the code decision units 3.

## Claims

1. An optical communication receiver comprising:
a photoelectric converter for converting an input optical signal into an electrical signal;
a signal divider for dividing the electrical signal from said photoelectric converter into a plurality of signals;
a clock extractor for reconstructing a clock of the photoelectrically converted input signal;
a plurality of code decision units for performing code decision of the plurality of electrical signals divided by said signal divider at different timings; and
an OR circuit for ORing outputs from said plurality of code decision units.

2. A receiver according to claim 1, wherein the code decision timings of the electrical signals in said plurality of code decision units are set by fixed or variable phase adjusters which are inserted in lines for supplying signal decision timing clocks to the respective code decision units to provide the signal decision timing clocks with different delays.

3. A receiver according to claim 1, wherein the code decision timings of the electrical signals in said plurality of code decision units are set by fixed or variable phase adjusters which are inserted between outputs of said signal divider and the respective code decision units to provide the respective electrical signals with different delays.

4. An optical communication receiver comprising:
an optical divider for dividing an input optical signal into a plurality of signals;
a plurality of photoelectric converters for converting the plurality of optical signals divided by said optical divider into electrical signals;
a clock extractor for reconstructing a clock of the photoelectrically converted input signal;
a plurality of code decision units for performing code decision of the electrical signals output from said plurality of photoelectric converters at different timings; and
an OR circuit for ORing outputs from said plurality of code decision units.

5. A receiver according to claim 4, wherein the code decision timings of the electrical signals in said plurality of code decision units are set by fixed or variable phase adjusters which are inserted in lines for supplying signal decision timing clocks to the respective code decision units to provide the signal decision timing clocks with different delays.

6. A receiver according to claim 4, wherein the code decision timings of the electrical signals in said plurality of code decision units are set by fixed or variable phase adjusters which are inserted between the respective photoelectric converters and the respective code decision units to provide the electrical signals output from said respective photoelectric converters with different delays.

7. A receiver according to claim 4, wherein the code decision timings of the electrical signals in said plurality of code decision units are set by fixed or variable phase adjusters which are inserted between outputs of said optical divider and the respective photoelectric converters to provide the respective electrical signals with different delays.

8. A receiver according to any one of claims 1 to 7, wherein the code decision timings in the respective code decision units are set with time differences within not less ±25% of a bit slot from a center of the bit slot.
